# EUROPÄISCHE PATENTSCHRIFT

(11) **EP 2 311 070 B1**
(45) Veröffentlichungstag und Bekanntmachung des Hinweises auf die Patenterteilung: **04.01.2012**
(21) Anmeldenummer: 09780834.9
(22) Anmeldetag: 20.07.2009
(51) Int. Cl.: H01J 65/04, H05B 41/28

(54) **HOCHDRUCKENTLADUNGSLAMPE**
HIGH-PRESSURE DISCHARGE LAMP
LAMPE À DÉCHARGE À HAUTE PRESSION

(30) Priorität: 14.08.2008 DE 102008037656
(43) Veröffentlichungstag der Anmeldung: 20.04.2011
(73) Patentinhaber: Osram AG, 81543 München (DE)
(72) Erfinder: STOCKWALD, Klaus, 82110 Germering (DE)
(86) Internationale Anmeldenummer: PCT/EP2009/059304
(87) Internationale Veröffentlichungsnummer: WO 2010/018048

(56) Entgegenhaltungen:
- EP-A2- 1 729 324
- WO-A2-2008/048978
- US-A- 5 306 987
- US-A- 5 508 592
- WITTING HARALD L.: "Acoustic resonances in cylindrical high-pressure arc discharges" JOURNAL OF APPLIED PHYSICS, Bd. 49, Nr. 5, Mai 1978 (1978-05), Seiten 2680-2683, XP002550336 DOI: 10.1063/1.325186

## Beschreibung

### Technisches Gebiet

Die Erfindung geht aus von einer Hochdruckentladungslampe gemäß dem Oberbegriff des Anspruchs 1.

### Stand der Technik

Aus der WO 2008/048978 sind modulierte Mikrowellenlampen bekannt.

Ähnliche resonant betriebene Lampen sind aus US 5 508 592 und US 6 737 815 bekannt. Die elektrodenlosen Entladungsgefäße sind hier immer zylindrisch mit halbkugelig abgerundeten Ecken.

### Darstellung der Erfindung

Die Aufgabe der vorliegenden Erfindung ist es, eine mikrowellenangeregte Hochdruckentladungslampe bereitzustellen, die geringe Farbschwankungen und eine gute Maintenance aufweist.

Diese Aufgabe wird gelöst durch die kennzeichnenden Merkmale des Anspruchs 1.

Besonders vorteilhafte Ausgestaltungen finden sich in den abhängigen Ansprüchen.

Erfindungsgemäß werden elektrodenlose per RF oder Mirowellen angeregte hocheffiziente Hochdruckentladungslampen vorgestellt, deren Konvektion akustisch gesteuert ist und die daher plasmastabilisiert sind. Sie zeichnen sich durch geringe Farbschwankung und gute Maintenance aus.

Moderne keramische Metallhalogenid-Lampen mit Elektroden haben das Problem von relativ hohen Verlusten an den Elektroden. Elektrodenverluste über Fallspannungen und über Wämeleitung zu den Lampenanschlüssen oder Zuleitungen betragen in der Leistungsbilanz 10 bis 20%, typisch sind im Mittel 15% Verlust.

Als Füllung für das Entladungsgefäß eignen sich bekannte Metallhalogenidfüllungen, insbesondere enthält das Entladungsgefäß eine Füllung mit Metallhalogeniden, die ausgewählt ist aus der Gruppe der Jodide von Na, Li, Tl, Ca, Seltene Erdmetalle (SE) allein oder in Kombination. Das System ist insbesondere für folgendes Füllsystem geeignet: NaJ, T1J, CaJ2 zusammen mit SEJ3, wobei SE mindestens eines der Elemente Tm, Ce, Pr, Nd ist.

Besonders bei Nutzung von Na/Li- und/oder Ce/Nd/Pr- haltigen Metallhalogenid-Füllungen erfolgt eine mehr oder weniger starke Entmischung der Schmelze im Durchführungsbereich der Elektroden, was zur Änderung der Farbqualität und der Lichtausbeute führen kann. Elektroden, die typisch aus Wolfram hergestellt sind, sind unvermeidbar beim Lampenbetrieb auch mit geringer Strombelastung einer Wolfram-Abtragung unterworfen, was zu Elektrodenrückbrand und Schwärzung der Brennerwand führt. Das Lebensdauerende von solchen Lampen wird durch Elektroden-Rückbrand und Füllungsmigration verursacht.

Bisher wurden keramische Metallhalogenid-Entladungslampen elektodenbehaftet betrieben. Elektrodenloser Betrieb von derartigen Lampen beschränkte sich kommerziell auf Quarzgefäße kleiner Leistung für Projektionsanwendungen mit geringer Lichtausbeute oder auf hohe Leistungen von typisch mindestens 250 W mit forcierter Kühlung. Bei diesem Betrieb wird eigenltich keine permanente akustische Beeinflussung der Konvektion zur Plasmastabilisierung benutzt. Universeller Betrieb in jeder Orientierung ist bei keramischen Gefäßen mit kleiner Leistung nur möglich, wenn eine Plasmastabilisierung geringe thermische Spannungen im Brenner erzeugt.

Zum besseren Verständnis der Erfindung sei folgendes erläutert:
Vorteilhaft werden für den Betrieb mit akustischen Resonanzen keramische Entladungsgefäße mit Metallhalogenidfüllung verwendet. Um eine hohe Effizienz sicherzustellen, die im Bereich zwischen 120 und 175 lm/W liegen kann, hat sich gezeigt, dass die thermischen Bedingungen gezielt verbessert werden müssen. Für verschiedene Nennleistungen muss dazu gezielt eine akustisch induzierte Konvektion angetrieben werden, die nach bestimmten Regeln mit der Oberfläche des Entladungsgefäßes skaliert. Dadurch lassen sich neuartige thermische Bedingungen erzwingen, die die Effizienz typisch in Höhen von 140 bis 150 lm/W langzeitstabil einstellen.

Ziel ist es, eine langzeit-stabile Mehrzellen-Konvektion zu erreichen. Diese kann dann über einen großen Nennleistungsbereich aufrechterhalten werden. Dafür ist entscheidend, Bereiche spezifischer Oberflächen festzulegen und Richtlinien dafür zu beachten. Eine geeignete Kenngröße dazu ist die Leistungsdichte.

Durch die Beschreibung der Skalierungsgesetze für die Verhältnisse von Oberflächen in Bezug auf die angewandte Nennleistung können keramische Entladungsgefäße für unterschiedliche Leistungsklassen und Lichtstromklassen konfiguriert werden.

Die Erfindung regelt gezielt die Konvektionsströmung im gezielt mittels akustischen Moden beeinflussten Entladungsplasma des Füllgases. Diese Strömung des Füllgases würde zu einem zusätzlichen Wärmestrom zum Ende des Entladungsvolumens hin führen. Dies würde eine Aufheizung dieses Endes und auch des cold-spot bedingen. Zur Eindämmung dieser Aufheizung muss eine effektive Endenkühlung etabliert werden, so dass der cold-spot und das Ende des Entladungsgefäßes nicht zu stark aufgeheizt werden.

Um eine Metallhalogenidlampe im longitudinalen akustischen Mode betreiben zu können, sollte die Geometrie des Entladungsgefäßes ein sog. Aspektverhältnis AV von mindestens 2 aufweisen. Bevorzugt liegt es im Bereich 3,5 bis 6, insbesondere ist AV = 4,5 bis 5,5, besonders geeignet ist ein Aspektverhältnis AV von 4,6 bis 4,8. Das Aspektverhältnis ist das Verhältnis zwischen der Innenlänge und dem Innendurchmesser des Entladungsgefäßes. Das Entladungsgefäß hat eine Längsachse und ist im wesentlichen zylindrisch. Es kann auch leicht in der Mitte ausgebaucht sein. Eine Betriebsweise für derartige Lampen ist beispielsweise in US 6 400 100 offenbart.

Bevorzugt wird ein bezogen auf das Innenvolumen zylindrisches Entladungsgefäß verwendet. Es hat eine äußere Mantelfläche sowie äußere Stirnflächen oder zumindest Schrägflächen. Die äußere Mantelfläche plus die äußeren Schräg- und Stirnflächen definieren eine gesamte äußere Oberfläche OS. Setzt man die Nennleistung P in Beziehung zu dieser gesamten äußeren Oberfläche OS, so zeigt sich, dass für eine hohe Effizienz die so definierte spezifische Nennleistung PS = P/OS einen Wert von 17 bis 25 W/cm² erreichen muss, während gleichzeitig die innere Wandbelastung an der inneren Oberfläche hoch gehalten werden muss. Sie soll mindestens 28 W/cm² erreichen.

Zum Verständnis der Erfindung ist es notwendig, in Gedanken das Entladungsgefäß quer zur Längsachse in drei Abschnitte zu unterteilen. Die Grenze ist dabei die Krümmungsänderung des Entladungsgefäßes. Ein zentraler mittiger Bereich mit geringer Krümmungsänderung, bevorzugt ist die Krümmungsänderung null, also der Innendurchmesser konstant oder nur sich wenig ändernd (Änderung kleiner als 15% über die Innenlänge) definiert einen heißen Plasmaabschnitt, in dem sich das Entladungsplasma erstreckt. Er wird im Betrieb relativ heiß. Die Wandbelastung im Bereich dieses Plasmaabschnitts soll bevorzugt im Bereich 28 bis 45 W/cm² betragen. Diese äußere Oberfläche des Plasmaabschnitts sei mit OH bezeichnet.

Die Oberfläche der dahinterliegenden Enden einschließlich schräger Flächen oder Stirnflächen, die die Kühlung bewirken, sei mit OK bezeichnet. Da das Entladungsgefäß zwei Enden hat, muss die Oberfläche beider Enden herangezogen werden. In der Regel sind beide Enden symmetrisch, so dass jede kühlende Oberfläche die Hälfte von OK hat.

Eine Kühlung wird dann besonders effektiv, wenn der Bogenabschnitt, dem OH zugeordnet ist, die hohe Wandbelastung W von mindestens 28 W/cm² im Betrieb erreicht, während die gesamte Oberfläche OS, also die Summe aus OH und OK, die deutlich geringere spezifische Nennleistung von 17 bis 25 W/cm² aufweist. Mit anderen Worten muss die Oberfläche OK im Bereich der Enden genügend groß sein. Erfindungsgemäß liegt das Verhältnis VH zwischen OK und OH bei 0,75 bis 1,25. Besonders bevorzugt liegt es im Bereich VH = 0,85 bis 0,90. Durch technische Kniffe wie Beschichtungen im Bereich von OK kann VH modifiziert werden.

Vorteile der Erfindung sind Realisierungsmöglichkeiten langlebiger hocheffizienter keramischer Hochdrucklampensysteme kleiner und mittlerer Leistung z.B. mit effizienten Mikrowellen-Anregungsverfahren. Somit lassen sich besondere kompakte Lampensysteme realisieren.

Es können jetzt Hg-arme und Hg-freie Füllungen ohne Beeinträchtigung von metallischen Elektroden und metalischen Durchführungbereichen genutzt werden. Die akustische Konfiguration der Konvektion verwendet jetzt ein längsgestrecktes Entladungsgefäß mit konisch zulaufenden Enden. Vorteilhaft können Einstülpungen am Entladungsgefäß vorhanden sein. Diese Anordnung gestattet einen hochbelasteten Brennerbetrieb an Luft oder im Vakuum-Außenkolben bei gleichzeitig geringen thermischen Spannungen, da das Entladungsplasma durch die eingestellte Konvektion im Brennerinneren gehalten wird und der Kontakt mit der keramischen Wand weitestgehend stabilisiert und minimiert werden kann.

Die Lampe wird insbesondere an einem modulierbaren Halbleiter-Hochfrequnez-Generator betrieben, bevorzugt einem Mikrowellen(MW)-Generator (Verstärkerschaltung im AB/C, D, E oder F-Klassen-Betrieb oder für verschiedene Betriebszustände umschaltbare Klasse) mit Anpassungsnetzwerk und Koppel-Applikator im Frequenzvbereich 50 MHz bis 5 GHz. Bevorzugt ist ein Bereich von typisch zwischen 200 MHz und 3 GHz, besonders bevorzugt ab 500 MHz, derart, daß eine Bogenstabilisierung auf die Brennerachse auftritt. Dies geschieht durch Nutzung eines akustisch induzierten Bogenbegradigungseffekts. Dazu wird periodisch die 2. azimuthale Resonanzfrequenz angeregt. Besonders bevorzugt wird eine Durchmischung des Plasmas durch Einstellung einer akustisch induzierten Multizellen-Struktur durch Aufprägung eines stehenden Wellenfeldes einer geradzahligen longitudinalen Resonanzfrequenz erzielt.

Die Modulation der Trägerfrequenz (typ. 200 MHz bis 3 GHz) erfolgt über Amplituden-Modulation, derart, daß periodisch die 2. azimuthale Resonanz-frequenz in einer Periodizität von 10 ms bis 1 ms überscannt wird, und zwar von f_{center}-□f nach f_{center}+□f ; mit 0.5 kHz <=□f<= 15 kHz, typisch ist 5 kHz.

Als weitere Option kann dieser Modulation eine weitere Modulation überlagert (z.B. durch Summation der Modulationsfrequenzen) werden, die eine Anregungslinie im Leistungsspektrum erzeugt, die in einer Prägephase nach dem Lampenstart mit einer Rate von ca. 50 Hz/sec bis 1 kHz/sec von einer Startfrequenz fₛₜₐᵣₜ, die bei ca. 1.25-1,3 * flong_hor ( Lage der long. Resonanz im Horizontalbetrieb) über der in horizontaler Lage befindlichen longitudinalen Resonanzfrequenz (bevorzugt ist die zweite) liegt und zu einer Stop-Frequenz in der Position unterhalb der in horizontaler Lage gemessenen longitudinalen Resonanzfrequenz (typ.0.05kHz bis 2.5 kHz Entfernung) verfahren wird und einem Leistungsanteil der Linienleistung von 3-35% der elektrischen Gesamtleistung entspricht. Dabei wird stabil eine akustisch induzierte Multizellenkonvektionsstruktur eingestellt und über lange Zeit stabilisiert. Dabei kommt es zu zwei oder mehreren symmetrisch bzgl. der Lampenmitte angeordneten Plasmaeinschnürungen an den Positionen der Druckknoten des stehenden Wellenfeldes der dann optimal angeregten longitudinalen akustischen Resonanz.

Je nach Leistungsanteil der Linienleistung zur Anregung der longitudinalen Resonanz kann die Linienleistung über dem Dauerbetrieb einer weiteren Modulation oder Sweepbewegung unterworfen sein.

Als Füllungsbestandteile werden eines oder mehrere aus der Gruppe

T1X, ZnX2, A1203, InX, InX3, HfX4, SnX2, MnX2, MgX2, ZrX4, TaX5, HgX2, CsX, NaX, DyX2, GaX3, CeX3, NdX3, PrX3, TmX3, ErX3, HoX3, DyX3, GdX3, TbX3, CaX2, ReX3, WX3, WOX, ReOX, S, Se, Te, Ge, Ga verwendet mit X = I, Br, Cl, F.

Die Verwendung elementarer Metalle und Mischungen daraus ist ebenfalls möglich.

Als Gase eignen sich alle Edelgase Ar, Ne, Kr, Xe sowie N2, CO2, CO, H2, D2, und Mischungen daraus.

Der Druckbereich kann 0,1 mbar (kalt) bis 300 bar (heiss) betragen. Bevorzugt ist der dRuck im Betrieb 0,5 bis 30 bar.

Das Gefäß kann aus keramischem (PCA, Y2O3, AlON, AlN, Zr2O3) oder glaskeramischem MAterial wie erstarrtes Hochtemperaturlot (binäre oder ternäre eutektsiche Mischungen von Metalloxiden (z.B. Y2O3, A1203, Ce2o3, SiO2, Dy2O3, CaO, usw.) oder aus einem (Quarz)Glasgefäß oder hybriden Stoffsystemen bestehen.

Die Innendurchmesser ID der Lampen kann bevorzugt 0.1 mm bis 15 mm betragen, bevorzugt höcshtens 10 mm. Die Innenlänge IL kann bevorzugt 0.35 bis 90 mm betragen, bevorzugt bis 50 mm.

Die Wandstärke liegt typisch im Bereich von ca. 0.1 mm bis 3 mm.

### Kurze Beschreibung der Zeichnungen

Im Folgenden soll die Erfindung anhand mehrerer Ausführungsbeispiele näher erläutert werden. Die Figuren zeigen:
- Fig. 1: eine Hochdruckentladungslampe mit Entladungsgefäß;
- Fig. 2: verschiedene Ausführungsbeispiele eines geeigneten Entladungsgefäßes;
- Fig.: 3 verschiedene weitere Ausführungsformen eines geeigneten Entladungsgefäßes;
- Fig. 4: ein System der Hochdruckentladungslampe im Detail;
- Fig. 5: ein Diagramm, das das Aspektverhältnis gegen verschiedene Resonanzfrequenzen bei einer Leistung von 50 W aufträgt;
- Fig. 6: ein Diagramm, das das Aspektverhältnis gegen verschiedene Resonanzfrequenzen bei einer Leistung von 100 W aufträgt;
- Fig. 7: ein vollständiges System mit Hochdruckentladungslampe.;

### Bevorzugte Ausführungsform der Erfindung

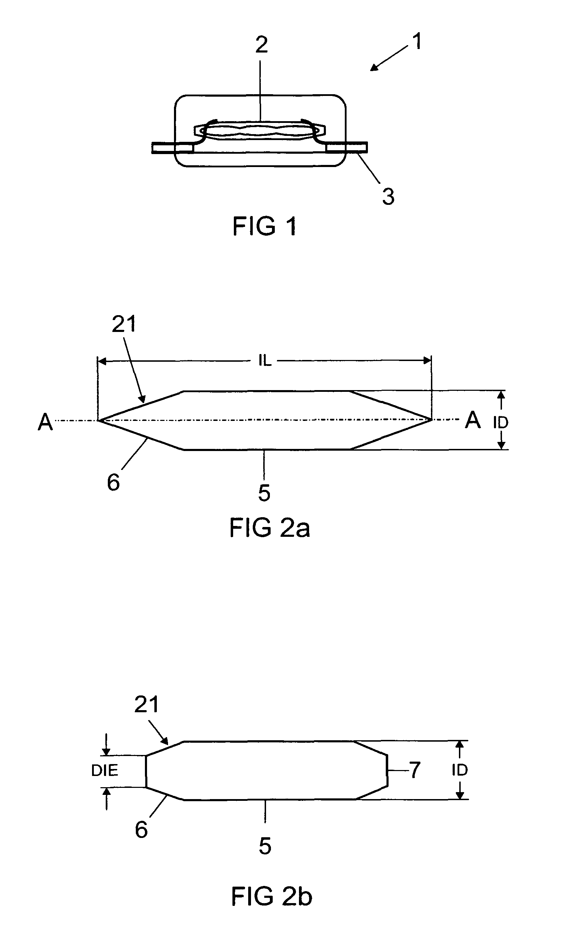

Figur 1 zeigt schematisch eine elektrodenlose Entladungslampe 1. Sie ist ihrem Wesen nach eine Keramik-Lampe. Das Entladungsgefäß 2 aus A1203-Keramik hat einen gegebenen Innendurchmesser ID, beispielsweise 2 mm, und eine gegebene Innenlänge IL, beispielsweise 10 mm. Die Füllung enthält beispielsweise NaJ, NaBr, InBr, InJ, CeJ3, CeBr3, Xe, HgJ2 und Hg.

Die Lampe wird an einem System mit Streifenleiterkoppler 3 mit Phasenschieber/lambda/2-Umwegleitung (Balun) an einem MW-Verstärker betrieben. Die MW-Frequenz beträgt 900 MHz. Die Leistung in die Lampe wird mit 25 W eingestellt. Die Modulationfrequenz für den Sweep beträgt 110 bis 125 kHz und die AM-Frequenz beträgt 45 Khz. Die Modulationstärke der Linienfrequenz beträgt 19%.

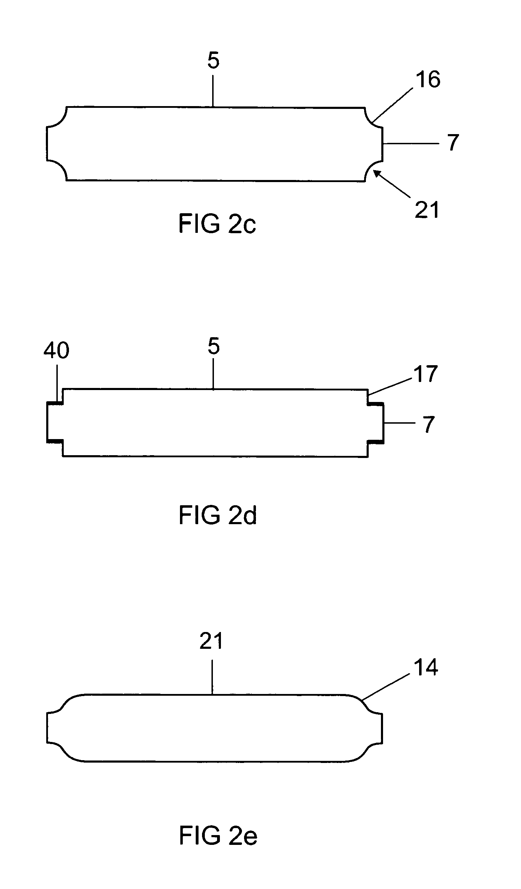

Figur 2 zeigt verschiedene besonders gut geeignete längsgestreckte Entladungsgefäße mit verengten Enden und longitudinaler Achse A. Dabei ist das Aspektverhältnis AV, also das Verhältnis IL/ID, mindestens 2, bevorzugt mindestens AV = 3,5. Eine Obergrenze ist bevorzugt durch AV = 8 gegeben. Die Verengung an den Enden 6 erstreckt sich über eine typische Länge von 1/8 bis 1/5 IL.

In der einfachsten Ausführungsform der Figur 2a ist das Entladungsgefäß 21 mit einem zylindrischen Mittelteil 5 ausgestattet. Die beiden Endteile 6 laufen konisch zu, so dass die größte Innenlänge IL in der Achse A erreicht wird.

Statt einer konischen Verengung kann das Entladungsgefäß gemäß Figur 2b auch stumpf verengt sein, so dass es in Achsennähe eine quer zur Achse stehende Endfläche 7 besitzt, die aber einen verringerten Innendurchmesser DIE besitzt. Dieser verringerte Innendurchmesser ist typisch 30 bis 65% des Innendurchmessers ID des Mittelteils 5.

Die Verringerung des Innendurchmessers kann auch über eine geeignete Krümmungskurve 16, siehe Figur 2c, oder aber auch nach Art einer Stufe 17, siehe Figur 2d, erreicht werden. Auch eine geschwungene Kurve 14 mit Wendepunkt ist zur Verringerung des Durchmessers geeignet, siehe Figur 2e.

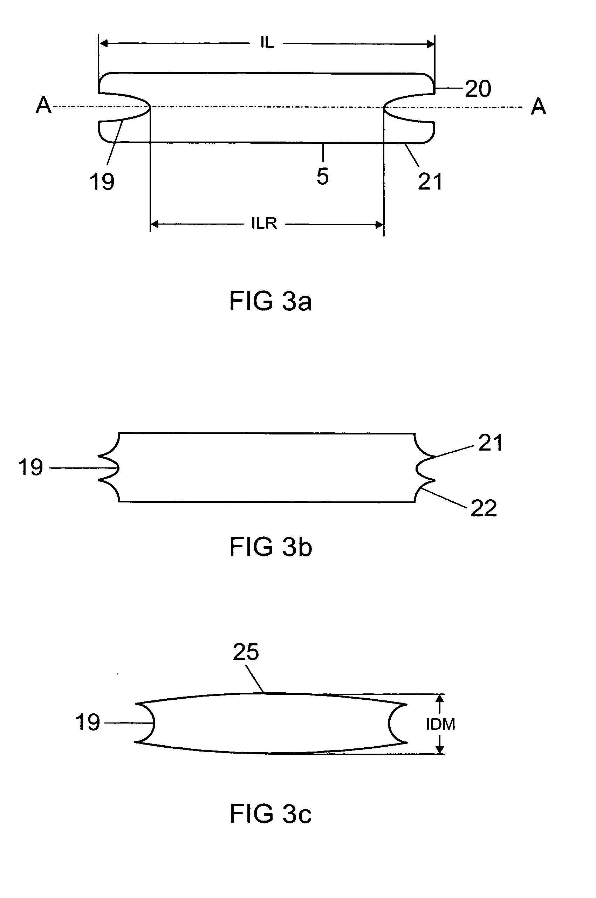

In einer zweiten grundsätzlichen Ausführungsform gemäß Figur 3 wird die Verringerung des Durchmessers des Entladungsgefäßes durch mindestens eine, insbesondere auch zwei, Einstülpungen oder Ausbuchtungen erreicht oder unterstützt. Damit wird erreicht, dass die größte Innenlänge IL außerhalb der Achse A erzielt wird. In der Achse A wird dagegen eine verringerte Innenlänge ILR erzielt. Auch hier ist die quer zur Achse A stehende gesamte Endfläche entweder nahe 0% bei spitz zulaufenden Ausbuchtungen (Figur 3b) oder sie liegt im Bereich von 30 bis 65% (Figur 3a).

Figur 3a zeigt ein Ausführungsbeispiel, bei dem eine zentrale Einstülpung 19 am Ende des Entladungsgefäßes vorgesehen ist. Außerhalb der Achse A sind nahezu plane Stirnflächen 20 vorgesehen. In dem Ausführungsbeispiel der Figur 3b ist eine Einstülpung 19 vorgesehen, wobei keine gerade Stirnfläche, sondern eine gekrümmte Verengung 22 die Verringerung des Innendurchmessers ID bewirkt. Das Entladungsgefäß hat dann zwei stirnseitige Spitzen 21, die nach außen zeigen.

In einer besonderen Ausführungsform gemäß Figur 3c ist das Mittelteil 25 nicht ein gerades Rohr mit konstantem Durchmesser, sondern es ist leicht konkav gekrümmt mit einem Maximum IDM in der Mitte. Der Unterschied im Innendurchmesser an den Enden sollte aber nicht mehr als 10% des maximalen Wertes IDM betragen. Bei diesem Ausführungsbeispiel gibt es keine Stirnfläche.

Besonders geeignet ist allgemein ein Aspektverhältnis AV von 3 bis 6, sehr vorteilhaft beträgt es AV = 4,5 bis 5.

Die Endenstruktur mit verringertem Innendurchmesser dient der Stabilisierung der Konvektionszellenströmung. Die axiale Länge des Endenbereichs mit verringertem Durchmesser sollte dabei so kurz wie möglich sein. Es sollte bevorzugt maximal 30% der maximalen inneren Länge IL betragen. Dann ist es signifikant für die Einstellung eines Temperatur-Gradienten am Ende wirksam.

Unterstützend wirkt auch eine im visuellen Spektralbereich transparente Beschichtung 40, siehe Figur 2d, mit erhöhter Emissivität, die zumindest ε = 0,55 beträgt. Damit ist der Mittelwert im Bereich 1 bis 3 µm gemeint. Dieser Bereich wird gemeinhin als NIR (nahes IR) bezeichnet. Diese Beschichtung sollte zumindest auf einem Teil des kühlenden Endenbereichs angebracht sein.

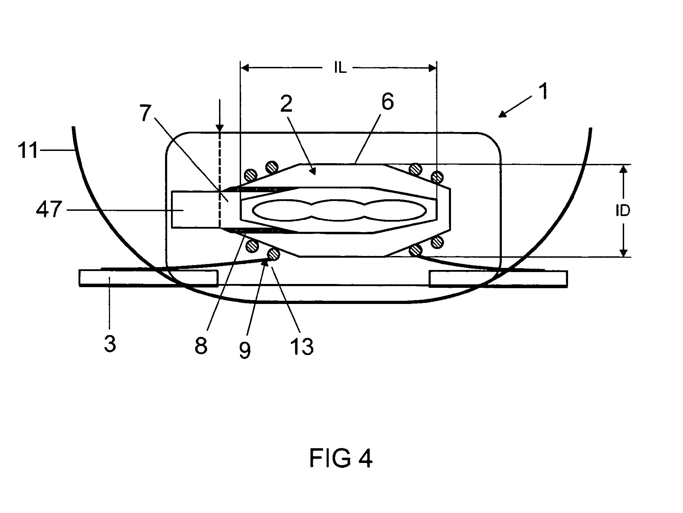

Figur 4 zeigt die grundsätzliche Realisierung eines Hochdruckentladungslampen-Systems 1. Kernstück ist das als akustischer Resonator wirkende keramische Entladungsgefäß 2, das hier konisch mit stumpfen Enden ist. Die praktische Ausführung ist so, dass das Entladungsgefäß einstückig als köcherartiges Rohr 6 mit einem konischen Ende gestaltet ist. Der Köcher selbst hat konstanten Innendurchmesser ID. Durch das zweite zunächst offene Ende wird die Füllung eingebracht. Danach wird auch das zweite Ende mit einem passenden Stopfen 7 verschlossen, der so geformt ist, dass er in seiner konischen Form dem ersten Ende entspricht. Dabei ist der Außendurchmesser des Stopfens dem Durchmesser ID des offenen Endes so angepasst, dass es mittels Glaslot-Einschmelzung 8 abgedichtet werden kann.

Der Stopfen hat einen Handhabungsteil 47, der nachträglich, nach erfolgtem Einsetzen und Abdichten, abgeschnitten oder bzgl. der Formgebung modifiziert werden kann, beispielsweise durch Laserschneiden oder durch mechanisches Abschleifen, siehe Pfeil.

Um das konische Ende ist ein spiralig gewundener Applikator 9 auf beiden Seiten gelegt. Er ist mit jeweils einem Streifenleiter 3 verbunden. Die Verbindung ist mit 13 bezeichnet. Das System wird noch durch einen dielektrischen Lichtreflektor 11 komplettiert, der konkav gekrümmt ist und der die Lampe in seinem Zentrum hält.

Dieses System vermeidet die hohen Endenverluste, die mit der Verwendung von Kapillaren und Elektrodenkonstruktion einhergehen. Diese bewegen sich in der Größenordnung von 10 bis 15% der Eingangsleistung.

Die erfindungsgemäßen neuen Gefäßformen schaffen eine akustische Multizellen-Anregung der Gaskonvektion im Entladungsplasma. Dabei ist die Beachtung folgender Bedingungen einzeln oder in Kombination hilfreich:

Das Verhältnis zwischen der totalen Lampenleistung P (in W) und der totalen äußeren Oberfläche OS sollte im Bereich 15 bis 30, bevorzugt 17 bis 25 W/cm² liegen. Besonders geeignet ist ein Wert von P/OS = 18 bis 22, insbesondere 19,5 bis 21 W/cm².

Das Verhältnis zwischen der totalen Lampenleistung P (in W) und der äußeren Oberfläche OSZ des zentralen Teils (ohne Enden mit verringertem Durchmesser) sollte im Bereich 25 bis 65, bevorzugt 28 bis 45 W/cm² liegen. Besonders geeignet ist ein Wert von P/OSZ = 30 bis 40 , bevorzugt 34 bis 38 W/cm².

Die gesamte Wandbelastung der inneren Oberfläche sollte bevorzugt im Bereich 30 bis 45, bevorzugt bis 42 W/cm² liegen. Besonders bevorzugt ist ein Wert von 36 bis 41 W/cm².

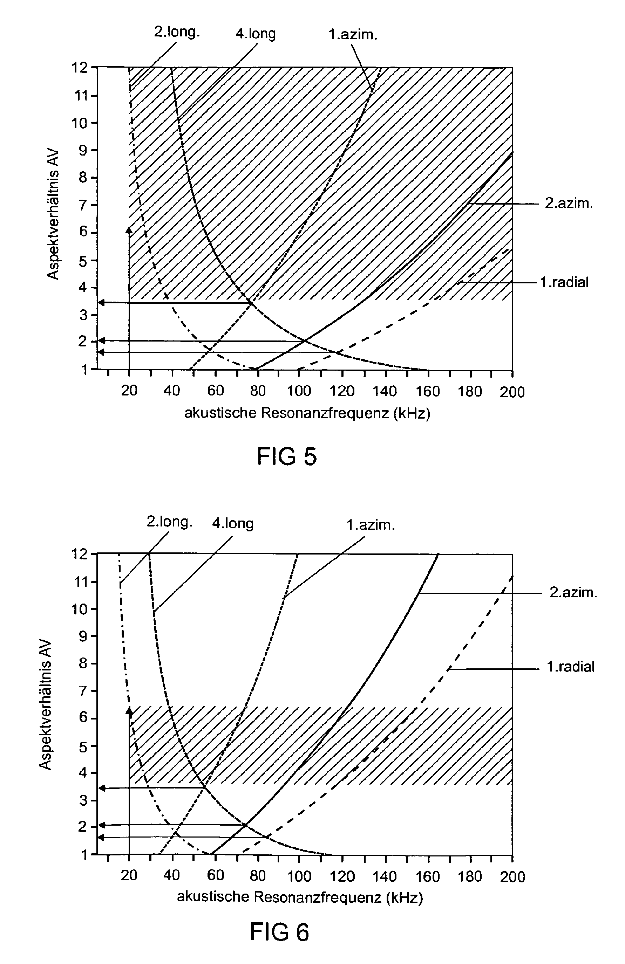

Figur 5 und 6 zeigt die die Wahl des Aspektverhältnisses AV für eine Lampenleistung von 50 W (Figur 5) und 100 W (Figur 6). Aufgetragen ist das Aspektverhältnis AV gegen die Lage der verschiedenen akustischen Resonanzfrequenzen. (in kHz). Eingetragen sind die 2. und 4. longitudinale Resonanzfrequenz, außerdem die 1. und 2. azimuthale und die 1. radiale Resonanzfrequenz.

Es zeigt sich, dass die 1. azimuthale Resonanz ungeeignet ist. Sie wirkt eher zerstörerisch als konstruktiv. Sie zeigt so starke Bogenverzerrung, dass ihre Anregung zur Verlöschung des Bogens führen kann.

Außerdem ist ein ausreichender Abstand zur 2. und 4. longitudinalen Resonanz notwendig. Der Abstand sollte mindestens 5 kHz sein.

Bei einem Aspektverhältnis von mindestens 2, besser von mindestens 3,5 wird eine ausreichende Auswählbarkeit der nutzbaren akustischen Resonanzen erreicht, auch bei verschiedener Wandbelastung und verschiedenem Leistungsniveau.

Bei Wahl eines einzigen Design, das gleichermaßen für einen größeren Leistungsbereich gültig ist, sollte das Aspektverhältnis möglichst in einem Bereich AV = 4 bis 6 gewählt werden. Die obere Grenze ist insbesondere dadurch gegeben, wenn die 2. longitudinale Resonanzfrequenz die Hörschwelle von etwa 19 kHz erreicht, siehe Pfeil in Figur 5 und 6.

Eine konkrete Untergrenze für die axiale Länge eines Endteils ist 10 % der Länge des Mittelteils. Bevorzugte Ausführungsformen des Entladungsgefäßes weisen an den Enden des Entladungsgefäßes entweder eine gerade Stirnfläche auf, oder die Stirnfläche ist sogar nach innen gestülpt. Auf diese Weise können die sich dort ausbildenden Konvektionszellen zusätzlich stabilisiert werden.

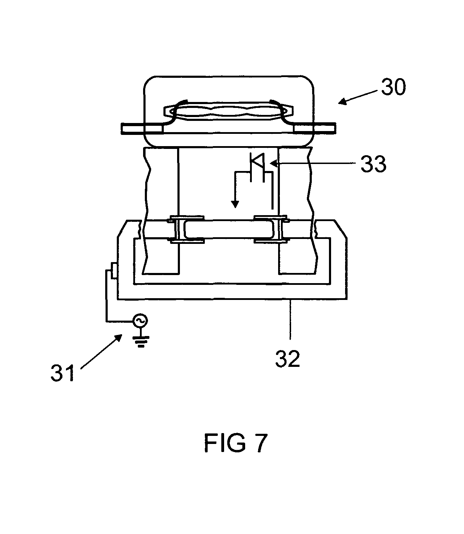

Figur 7 zeigt eine Hochdruckentladungslampensystem mit einem Entladungsgefäß 30 und einer Spannungsquelle 31 sowie einem EVG 32, das eine Zündhilfsschaltung 33 enthält.

Im Betrieb wird als Trägerfrequenz RF 50 MHz bis 3 GHz benutzt wird, wobei insbesondere durch Amplitudenmodulation (AM) periodisch die 2. azimuthale Resonanzfrequenz angeregt wird.

Bevorzugt wird dieser Frequenz eine geradzahlige longitudinale Resonanzfrequenz als weitere Modulation aufgeprägt, bevorzugt die zweite oder vierte longitudinale Resonanzfrequenz.

Besonders bevorzugt erfolgt die Modulation der Trägerfrequenz mit einer Periodizität von 10 ms bis 1 ms.

## Patentansprüche

1. Hochdruckentladungslampensystem, das elektrodenlos ist und mittels hochfrequenter elektromagnetischer Wellen, insbesondere Radiofrequenzen (RF), bevorzugt Mikrowellen, angeregt wird, mit einem keramischen längsgestreckten Entladungsgefäß (21), das eine Achse A aufweist, wobei das Entladungsgefäß eine Füllung aufweist, die ein Plasma bildet, wenn eine Radiofrequenzleistung (RF) in die Füllung vom Basiskörper aus eingekoppelt wird, wobei die Füllung ein Gas und zumindest ein Metallhalogenid umfasst, wobei eine Schaltung zum Betrieb der Lampe beigeordnet ist, die RF-Leistung bereitstellt, so dass die eingekoppelte RF-Leistung das Metallhalogenid verdampft, was zur Lichtemission führt, wobei das Entladungsgefäß speziell für den Betrieb mit akustischer Modulationssteuerung der Plasmaströmung ausgelegt ist, indem das Entladungsgefäß in ein Zentrales Mittelteil (5) mit zumindest näherungsweise konstantem Innendurchmesser ID und zwei Enden (6) gegliedert ist, deren Innendurchmesser sich zum Ende hin reduziert, **dadurch gekennzeichnet, dass** das Verhältnis zwischen der äußeren Oberfläche OK der beiden Enden zusammengefasst und einschließlich der etwaigen Stirnflächen und der äußeren Oberfläche OH des zentralen Mittelteils im Bereich 75 bis 125 % liegt.

2. Hochdruckentladungslampensystem nach Anspruch 1, **dadurch gekennzeichnet, dass** in unmittelbarer Nachbarschaft des Entladungsgefäßes ein Basiskörper angeordnet ist, wobei der Lampenbasiskörper ein dielektrisches Material umfasst.

3. Hochdruckentladungslampensystem nach Anspruch 1, **dadurch gekennzeichnet, dass** das Aspektverhältnis AV von Innenlänge IL zu Innendurchmesser ID in der Mitte M des Entladungsgefäßes bei mindestens 2 liegt, bevorzugt bei mindestens 3,5.

4. Hochdruckentladungslampensystem nach Anspruch 1, **dadurch gekennzeichnet, dass** das Verhältnis zwischen der totalen Lampenleistung P in W und der totalen äußeren Oberfläche OS im Bereich 15 bis 30 W/cm² liegt

5. Hochdruckentladungslampensystem nach Anspruch 1, **dadurch gekennzeichnet, dass** das Verhältnis zwischen der totalen Lampenleistung P in W und der äußeren Oberfläche OSZ des zentralen Teils ohne die Enden mit verringertem Durchmesser im Bereich 28 bis 45 W/cm² liegt.

6. Hochdruckentladungslampensystem nach Anspruch 1, **dadurch gekennzeichnet, dass** die gesamte Wandbelastung der inneren Oberfläche im Bereich 30 bis 45 W/cm² liegt.

7. Hochdruckentladungslampensystem nach Anspruch 1, **dadurch gekennzeichnet, dass** der Fülldruck der Lampenatmosphäre im Betrieb 0,5 bis 30 bar beträgt.

8. Hochdruckentladungslampensystem nach Anspruch 1, **dadurch gekennzeichnet, dass** die Füllung des Entladungsgefäßes Metallhalogenide aus der Gruppe Na, Li und/oder aus der Gruppe Tm, Nd, Pr, Ce enthält.

9. Hochdruckentladungslampensystem nach Anspruch 1, **dadurch gekennzeichnet, dass** im Betrieb als Trägerfrequenz RF 50 MHz bis 3 GHz benutzt wird, wobei durch Amplitudenmodulation periodisch die 2. azimuthale Resonanzfrequenz angeregt wird.

10. Hochdruckentladungslampensystem nach Anspruch 9, **dadurch gekennzeichnet, dass** dieser Frequenz eine geradzahlige longitudinale Resonanzfrequenz als weitere Modulation aufgeprägt wird, bevorzugt die zweite oder vierte.

11. Hochdruckentladungslampensystem nach Anspruch 10, **dadurch gekennzeichnet, dass** die Modulation der Trägerfrequenz mit einer Periodizität von 10 ms bis 1 ms erfolgt.

## Claims

1. High-pressure discharge lamp, which has no electrodes and is excited by means of high-frequency electromagnetic waves, in particular radio frequency (RF), preferably microwaves, with a ceramic elongated discharge vessel (21), which has an axis A, wherein the discharge vessel has a filling that forms a plasma, when radio frequency power (RF) is coupled into the filling from the base body, wherein the filling comprises a gas and at least one metal halide, wherein a circuit for operation of the lamp is coordinated, which provides RF power, so that the coupled-in RF power vaporises the metal halide, which leads to light emission, wherein the discharge vessel is specially designed for operation with acoustic modulation control of the plasma flow, in that the discharge vessel is divided into a central mid part (5) with an at least approximately constant internal diameter ID and two ends (6), whose internal diameter reduces towards the end, **characterised in that** the ratio between the external surface OH of the two ends, taking both ends together and including any faces and the external surface OH of the central mid part, lies in the range 75 to 125%.

2. High-pressure discharge lamp in accordance with claim 1, **characterised in that** a base body is arranged in the immediate vicinity of the discharge vessel, wherein the lamp base body comprises a dielectric material.

3. High-pressure discharge lamp in accordance with claim 1, **characterised in that** the aspect ratio AV of internal length IL to internal diameter ID in the middle M of the discharge vessel is at least 2, preferably at least 3.5.

4. High-pressure discharge lamp in accordance with claim 1, **characterised in that** the ratio between the total lamp wattage P in W and the total external surface OS lies in the range 15 to 30 W/cm².

5. High-pressure discharge lamp in accordance with claim 1, **characterised in that** the ratio between the total lamp wattage P in W and the external surface OSZ of the central part without the ends with reduced diameter lies in the range 28 to 45 W/cm².

6. High-pressure discharge lamp in accordance with claim 1, **characterised in that** the overall wall loading of the inner surface lies in the range 30 to 45 W/cm².

7. High-pressure discharge lamp in accordance with claim 1, **characterized in that** the fill pressure of the lamp atmosphere during operation is 0.5 to 30 bar.

8. High-pressure discharge lamp in accordance with claim 1, **characterised in that** the filling of the discharge vessel contains metal halides from the group Na, Li and/or from the group Tm, Nd, Pr, Ce.

9. High-pressure discharge lamp in accordance with claim 1, **characterised in that** during operation RF 50 MHz to 3 GHz is used as the carrier frequency, wherein the second azimuthal resonance frequency is periodically excited by means of amplitude modulation.

10. High-pressure discharge lamp in accordance with claim 9, **characterized in that** a straight-line longitudinal resonance frequency is applied to this frequency as further modulation, preferably the second or fourth.

11. High-pressure discharge lamp in accordance with claim 10, **characterized in that** the carrier frequency is modulated with a periodicity of 10 ms to 1 ms.

## Revendications

1. Système de lampe à décharge à haute pression, sans électrodes et excité par des ondes électromagnétiques à haute fréquence, en particulier des radiofréquences (RF), de préférence des micro-ondes, comprenant une enceinte de décharge (21) allongée en céramique ayant un axe A, l'enceinte de décharge enfermant un remplissage qui forme un plasma lorsqu'une puissance radiofréquence (RF) est injectée dans le remplissage depuis le corps de base, le remplissage comprenant un gaz et au moins un halogénure métallique, un circuit étant adjoint pour faire fonctionner la lampe, qui fournit une puissance RF, de sorte que la puissance RF injectée vaporise l'halogénure métallique, induisant ainsi l'émission de lumière, l'enceinte de décharge, conçue spécialement pour le fonctionnement à commande de modulation acoustique du courant plasma, étant divisée en une partie centrale (5) de diamètre intérieur ID au moins approximativement constant et deux extrémités (6) dont le diamètre intérieur se réduit en direction du bout, **caractérisé en ce que** le rapport entre la surface extérieure OK des deux extrémités réunies et incluant les éventuelles faces frontales, et la surface extérieure OH de la partie centrale est dans la plage de 75 à 125 %.

2. Système de lampe à décharge à haute pression selon la revendication 1, **caractérisé en ce qu'**un corps de base est disposé au voisinage direct de l'enceinte de décharge, le corps de base de lampe comprenant une matière diélectrique.

3. Système de lampe à décharge à haute pression selon la revendication 1, **caractérisé en ce que** le rapport d'aspect AV longueur intérieure IL/diamètre intérieur ID au centre M de l'enceinte de décharge est d'au moins 2, de préférence d'au moins 3,5.

4. Système de lampe à décharge à haute pression selon la revendication 1, **caractérisé en ce que** le rapport entre la puissance de lampe totale P en W et la surface extérieure totale OS est dans la plage de 15 à 30 W/cm².

5. Système de lampe à décharge à haute pression selon la revendication 1, **caractérisé en ce que** le rapport entre la puissance de lampe totale P en W et la surface extérieure OSZ de la partie centrale sans les extrémités de diamètre réduit est dans la plage de 28 à 45 W/cm².

6. Système de lampe à décharge à haute pression selon la revendication 1, **caractérisé en ce que** la charge de paroi totale de la surface intérieure est dans la plage de 30 à 45 W/cm².

7. Système de lampe à décharge à haute pression selon la revendication 1, **caractérisé en ce que** la pression de remplissage de l'atmosphère de lampe en fonctionnement est de 0,5 à 30 bar.

8. Système de lampe à décharge à haute pression selon la revendication 1, **caractérisé en ce que** le remplissage de l'enceinte de décharge contient des halogénures métalliques du groupe Na, Li et/ou du groupe Tm, Nd, Pr, Ce.

9. Système de lampe à décharge à haute pression selon la revendication 1, **caractérisé en ce qu'**en fonctionnement, on utilise comme fréquence porteuse RF 50 MHz à 3 GHz, la deuxième fréquence de résonance azimutale étant excitée périodiquement par modulation d'amplitude.

10. Système de lampe à décharge à haute pression selon la revendication 9, **caractérisé en ce que** cette fréquence se voit appliquer comme autre modulation une fréquence de résonance longitudinale de nombre pair, de préférence la deuxième ou quatrième.

11. Système de lampe à décharge à haute pression selon la revendication 10, **caractérisé en ce que** la modulation de la fréquence porteuse s'effectue avec une périodicité de 10 ms à 1 ms.
